# EUROPEAN PATENT APPLICATION

(11) **EP 3 902 075 A1**
(43) Date of publication of application: **27.10.2021**
(21) Application number: 21169278.5
(22) Date of filing: 20.04.2021
(51) Int. Cl.: H02G 7/02, H02G 7/04, H02G 7/16, H02G 7/18, H02G 7/05

(54) **PROTECTION SYSTEM FOR OVERHEAD POWER LINES, COMPRISING A SAFETY DEVICE FOR INTERRUPTING THE PASSAGE OF CURRENT IN A SECTION OF THE POWER LINE**

(30) Priority: 20.04.2020 IT 202000008395
(71) Applicant: Tenesa S.r.l., 14050 Moasca (Asti) (IT)
(72) Inventor: JOVANOV, Daniel, I-14050 MOASCA (Asti) (IT)
(74) Representative: Savoca, Agatino

(57) **Abstract**

A protection system (1) for power lines comprises a safety device which includes: at least one electrically conductive body (60), adapted to electrically connect the terminals of two electrical conductors (61); a coupling plate (62), which may be secured to a support (P), a pivotable element being hinged to this coupling plate (62); and a breaking element (64), connected to the pivotable element and adapted to engage the electrically conductive body (60), said breaking element (64) being movable from a rest position, wherein the electrically conductive body (60) is in an undeformed condition, and an engaged position, wherein the electrically conductive body (60) is in a deformed condition and prevents the transmission of an electric current between its ends.

## Description

### Technical field

The present invention relates, in general, to the sector of protection systems for electric lines; in particular, the invention refers to a structural protection system for power lines, comprising a safety device for interrupting the passage of current in a segment of the power line.

### Summary of invention

It is known that the electrical cables of an overhead line may bear an excessive weight due, for example, to ice or snow that may deposit on them, or to a sudden load, for example due to a tree falling on the cables, or to the failure of a support pole due to a landslide or an accident (for example, when a car hits the support, pulling down the electric cables connected to it). This may lead to the collapse of the supporting structure and the conductor cables falling to the ground, which, if still powered, may represent a serious danger (electrocution of people or animals, fire risks, etc.).

An object of the present invention is to solve the aforementioned problem.

To obtain this result, a protection system for power lines according to the present invention comprises a safety device, comprising an electrically conductive body to which the terminals of two electrical conductors are connected (in the illustrated example, the cables of an overhead power line), and a breaking element, connected on one side to this electrically conductive body and on the other to a pivotable element, in turn hinged to a plate fixed to a support (for example, a pole of the power line). The pivotable element supports one of the electrical conductors, whereby it undergoes pivoting when the latter is subjected to a load that increases its tension. In this way, the pivoting of the pivotable element, caused by the lowering of the relevant cable due to a load on said cable, is mechanically transmitted to the electrically conductive body by means of the breaking element.

If the transmitted stress is sufficient (and, therefore, if the pivoting of the pivotable element is large enough due to a load on the cable that exceeds a predetermined safety limit), the electrically conductive body deforms (expediently up to the breakage point, with a brittle-type transition), preventing the passage of current between the two cables connected thereto.

In this way, it is possible to interrupt the electrical continuity of the line locally, especially in the presence of an impulse load on the cable that exceeds a safety value (when a tree falls on the cable, etc.), so as to protect people, animals, or property from risks of electrocution or fire.

According to an embodiment, the protection system further comprises an extensible tensioning device which includes a tubular body, connectable at one end to a fixed support (expediently, the aforesaid plate fixed to a support pole of the overhead power line), this tubular body forming the pivotable element to which the rupture element which engages the electrically conductive body of the safety device is connected.

A piston, which may be connected to an overhead power line, slides rotatably in the tubular body. The telescopic extension of the piston rod with respect to the tubular body allows the cable to flex and twist under the weight of snow or ice, without causing the support to collapse, ideally until the snow falls and the cable is lightened. According to an embodiment, the rotation imparted to the cable may be of the vibrating type, so as to cause the crushing and detachment of the snow or ice that is deposited thereon.

Thus, once the extra weight has been removed, an elastic means causes the rod to return to the cylindrical body, and the cable is brought back to its initial condition.

Optionally, an anti-pulling device may be connected to the pivotable element (expediently to the rod of the extensible tensioning device), wherein there is a retaining element that holds a tab to which an electric cable of the line is connected. The anti-pulling device is configured in such a way that, by increasing the traction on the electric cable beyond a certain threshold (for example, due to a tree falling on the cable, or a failure of the support pole), the tab releases from the retaining element, causing the disconnection of the electric cable and local interruption of the line. This is advantageous since, in this way, the line is not globally compromised, since the interruption is located only in the vicinity of the fault, whereby the integrity of the infrastructure that is slave to the line is preserved, and the damage to one span does not extend to the subsequent spans of the line. Due to the greater safety ensured by such a solution, it is possible to effectively protect the environment surrounding the line, to the benefit of people, property, or animals in the vicinity.

In general, therefore, a protection system comprising a safety device according to the invention, expediently coupled to an extensible tensioning device (and possibly to an anti-pulling device of the aforesaid type), allows the environment surrounding the power line to be optimally protected, as the fall to the ground of still-powered electric cables is prevented because any extra weight on one of the cables (when not compensated by the tensioning and anti-pulling devices) would produce a rotation of the pivotable element so as to deform (and ideally break) the conductive body of the safety device, preventing the passage of current between the electrical conductors.

The aforesaid and other objects and advantages are achieved, according to an aspect of the invention, by a protection system having the features defined in claim 1. Preferred embodiments of the invention are defined in the dependent claims.

### Brief description of the drawings

The functional and structural features of some preferred embodiments of a protection system for power lines according to the invention will now be described. Reference is made to the appended drawings, wherein:
- Fig. 1 is a schematic perspective view of an assembly of a protection system comprising a safety device, according to an embodiment of the invention;
- Fig. 2 is a schematic perspective view of an assembly of a protection system comprising a safety device, according to a further embodiment of the invention;
- Fig. 3 is a schematic perspective view of an assembly of a protection system comprising a safety device, the whole being secured to a support of the power line, according to a further embodiment of the invention;
- Fig. 4 is a perspective view of a detail of Fig. 3;
- Fig. 5 and 6 are schematic views of the assembly of Fig. 4, wherein some elements have been removed to make the breaking element visible behind the electrically conductive bodies, said breaking element shown respectively in rest and activation conditions;

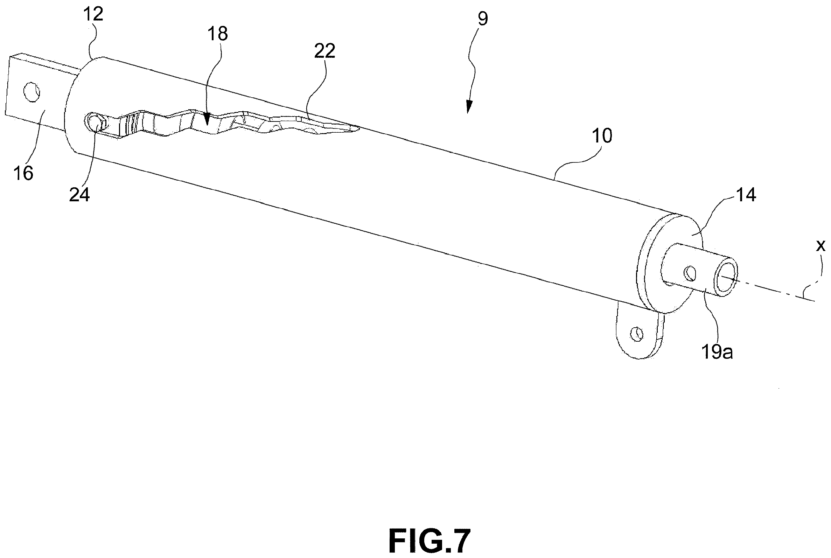

- Fig. 7 is a schematic perspective view of an extensible tensioning device optionally included in the protection system, according to an embodiment of the invention;

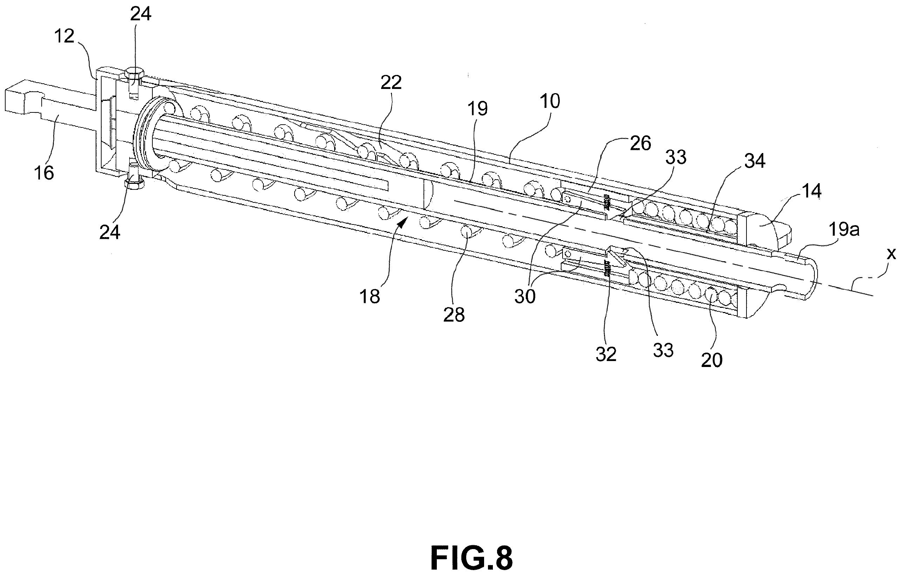

- Fig. 8 is a schematic view in longitudinal cross section of the extensible tensioning device of Fig. 7;

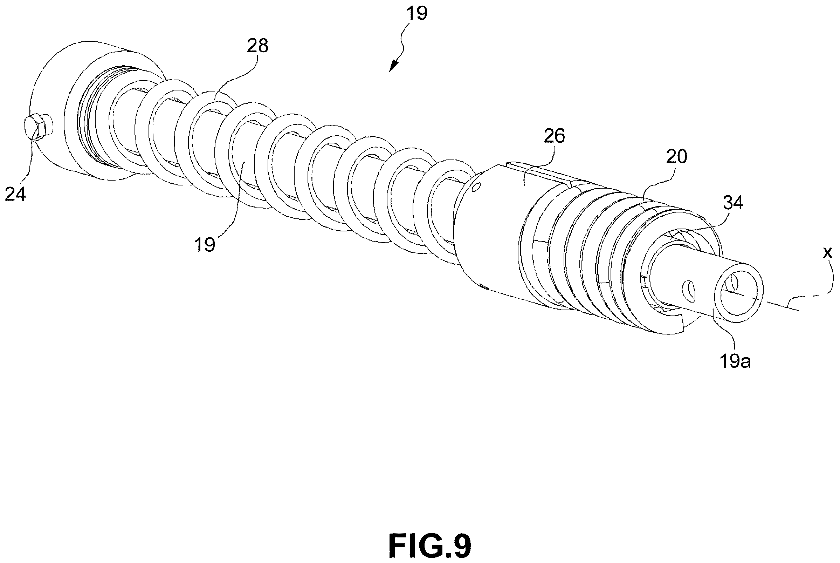

- Fig. 9 is a schematic perspective view of the components inside the tubular casing of the extensible tensioning device of Fig. 7 and 8 in assembled configuration;

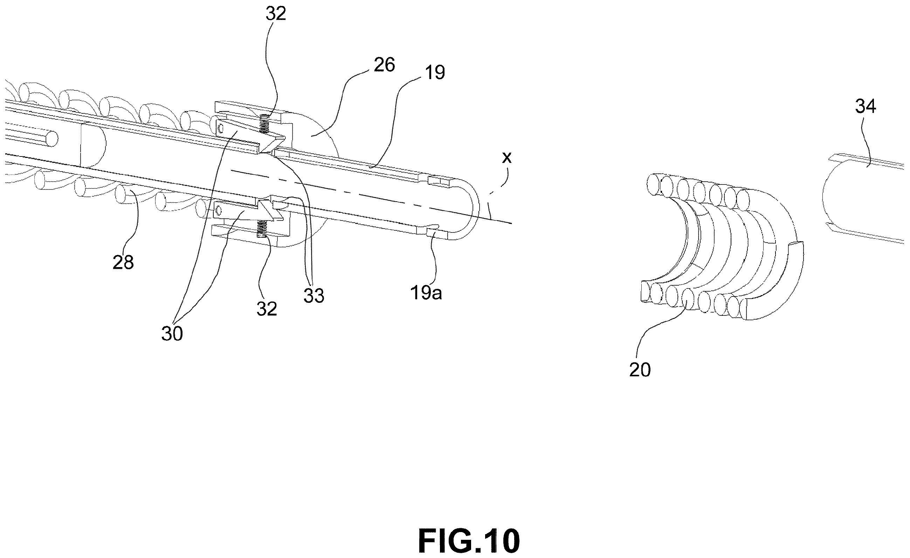

- Fig. 10 is a partially exploded schematic perspective view of the components of the extensible tensioning device of Fig. 3;

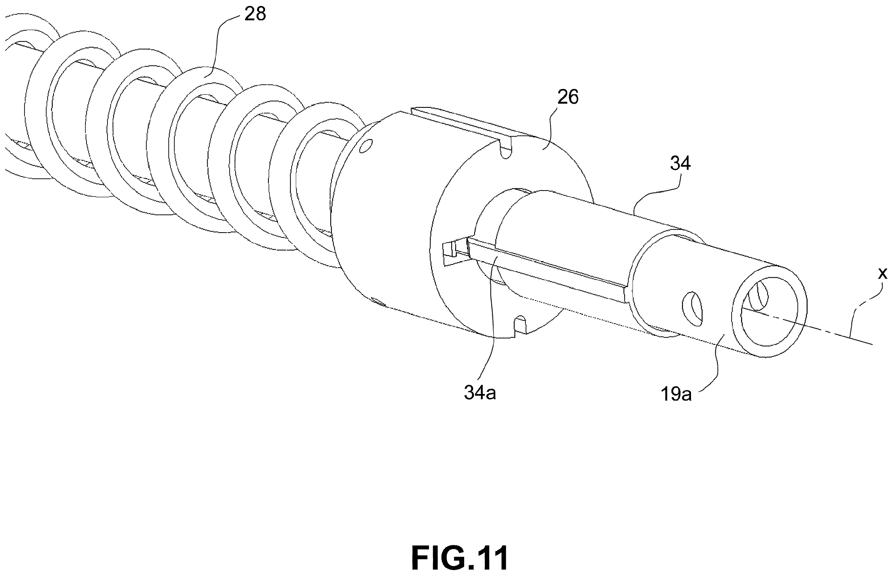

- Fig. 11 is a schematic perspective view of some components of the extensible tensioning device of Fig. 9, in a rest condition;

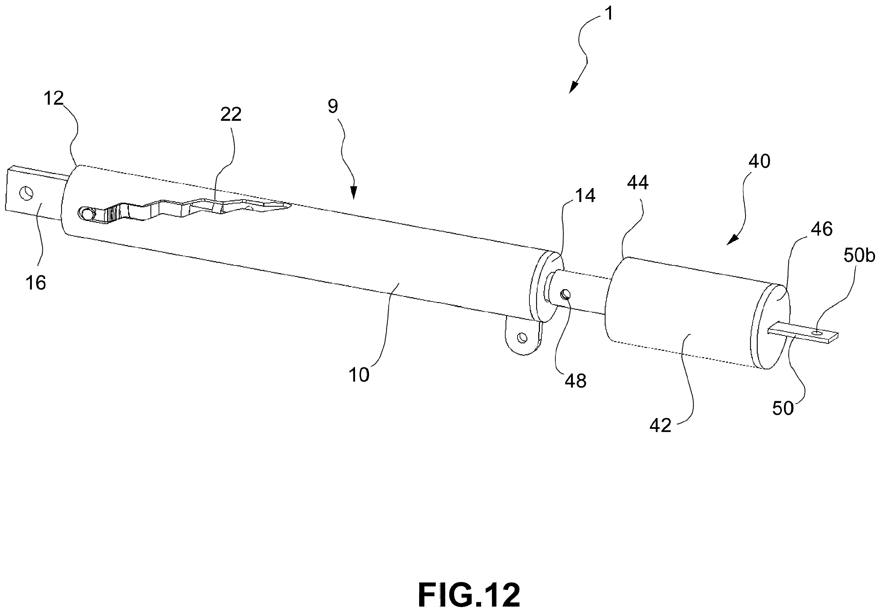

- Fig. 12 is a schematic perspective view of an assembly of an extensible tensioning device and an anti-pulling device, optionally included in the protection system, according to an embodiment of the invention;

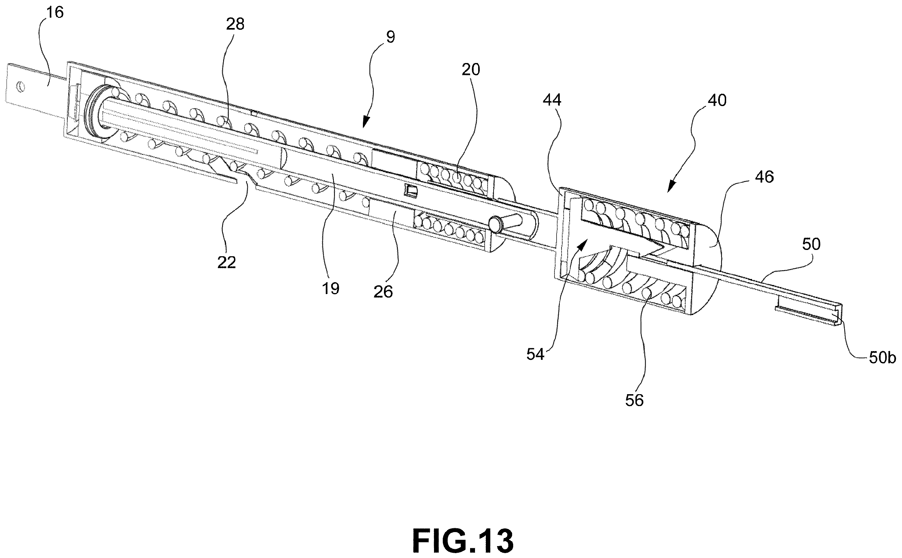

- Fig. 13 is a schematic view in longitudinal cross section of the assembly of Fig. 12;

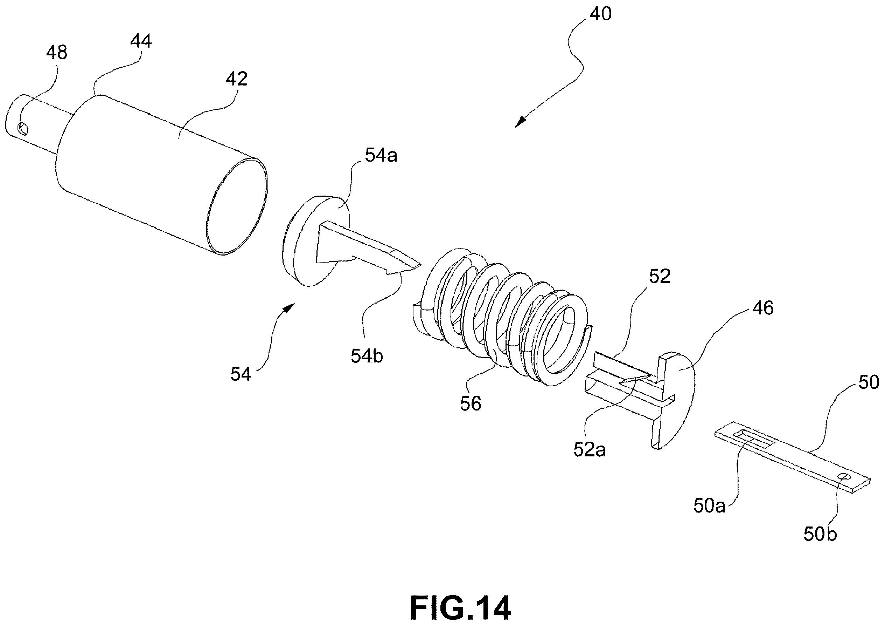

- Fig. 14 is an exploded schematic perspective view of the components of the anti-pulling device of Fig. 12; and
- Fig. 15 and 16 are perspective views in longitudinal cross section of the anti-pulling device of Fig. 12, respectively in a rest condition (wherein the retaining element holds the tab) and in a release condition (wherein the tab is released from the retaining element).

### Detailed description

Before describing a plurality of embodiments of the invention in detail, it should be clarified that the invention is not limited in its application to the construction details and configuration of the components presented in the following description or illustrated in the drawings. The invention is capable of assuming other embodiments and of being implemented or constructed in practice in different ways. It should also be understood that the phraseology and terminology have a descriptive purpose and should not be construed as limiting.

Referring by way of example to the figures, a protection system 1 for power lines comprises a safety device for interrupting the passage of current in a segment of the power line, which includes at least one electrically conductive body 60, extended between two ends and adapted to connect the terminals of two electric conductors 61 electrically, connectable to said ends of said electrically conductive body; a coupling plate 62, which may be secured to a support P (for example, a pole or trellis supporting the power line), a pivotable element being hinged to this coupling plate 62; and a breaking element 64, connected to this pivotable element and adapted to engage the electrically conductive body 60. The pivotable element (expediently connected to an electric conductor 61, in such a way that extra weight pressing on the latter causes a rotation of the pivotable element) is movable from a rest position, wherein the electrically conductive body 60 is in an undeformed condition, and an engaged position, wherein the electrically conductive body 60 is in a deformed condition and prevents the transmission of an electric current between its ends.

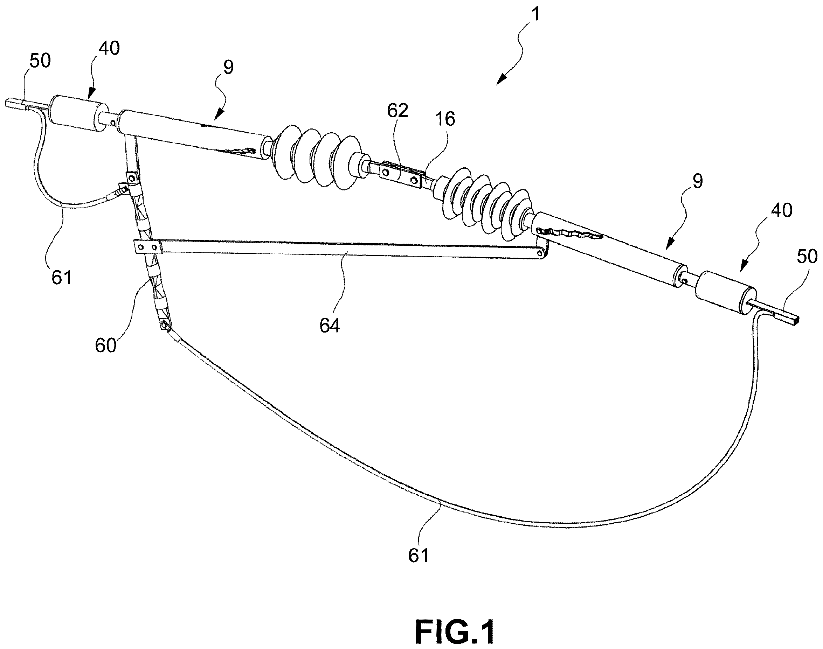

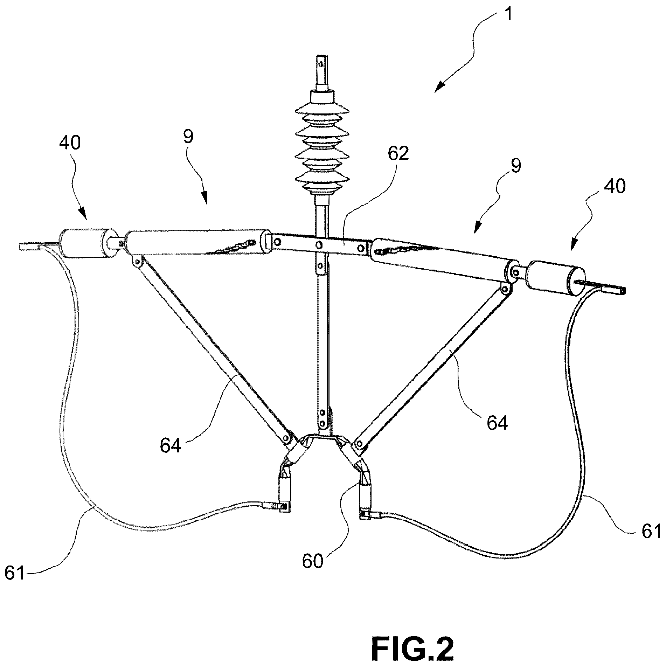

According to an embodiment, the breaking element 64 is a rod hinged at one end to the extensible tensioning device 9, and at its opposite end to the electrically conductive body 60 (as shown by way of example in Fig. 1 and 2), whereby the pivoting of the extensible tensioning device 9 transmits, through the breaking element 64, a flexing or twisting action to the electrically conductive body 60. When this action exceeds a predetermined threshold, the deformation to the electrically conductive body 60 would be such as to prevent the passage of current between the two ends of the electrically conductive body 60 (ideally causing it to break).

According to an embodiment (illustrated by way of example in Fig. 1), there is a rod hinged to the electrically conductive body 60 on one side, and on the opposite side to a pivotable element arranged on the side of the plate 62 downstream with respect to the direction of the current (which, in the illustrated example, flows from left to right from the viewpoint of the figures), so as to form a "triangular" configuration. Alternatively (as shown for example in Fig. 2), there may be two rods, connected to pivotable elements arranged on both sides of the plate 62, to form a "quadrangular" configuration.

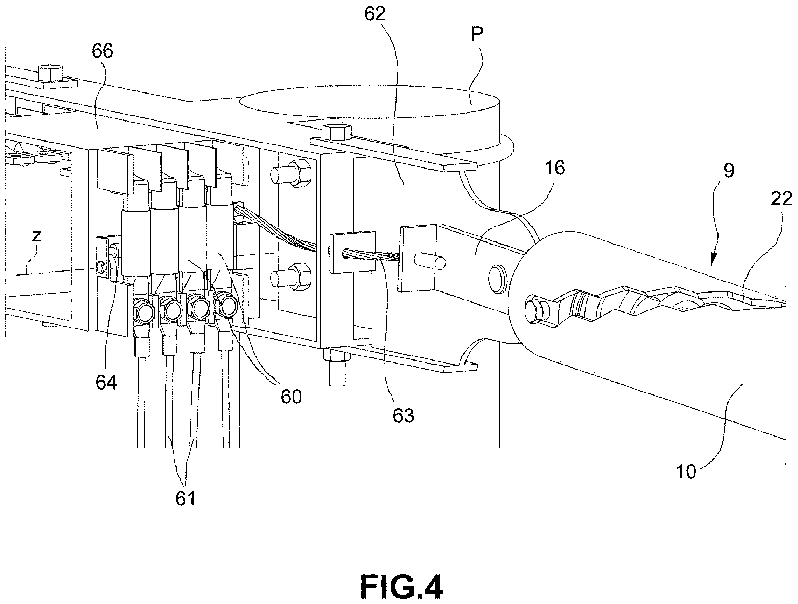

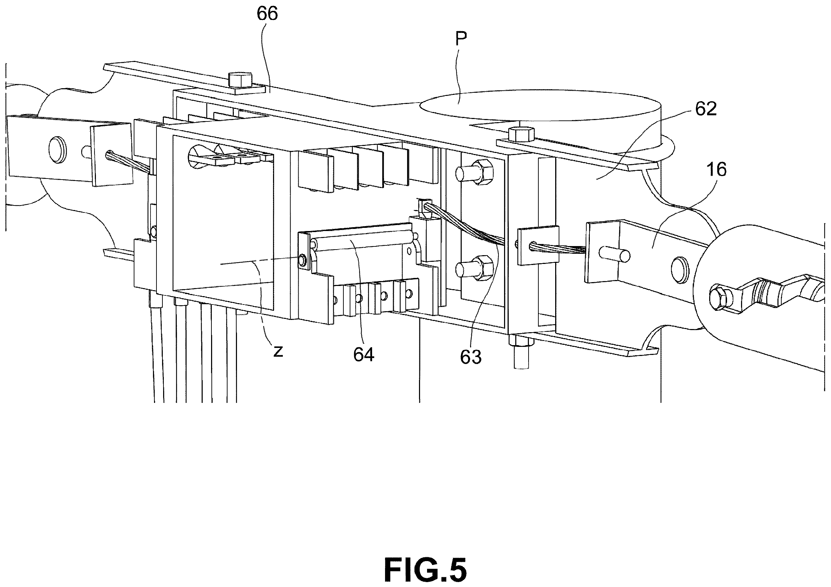

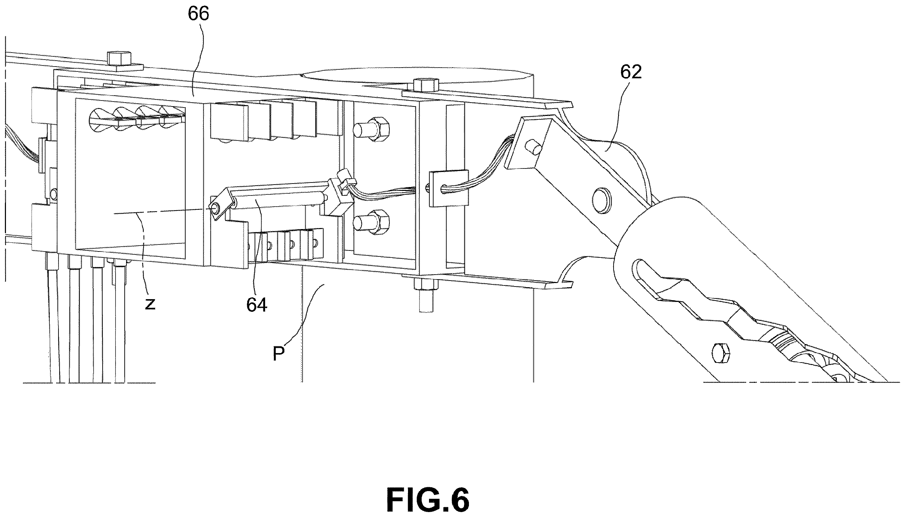

According to an embodiment, the system 1 comprises a junction box 66, integral with the coupling plate 62, the at least one electrically conductive body 60 (expediently, there is a plurality of electrically conductive bodies 60, each associated with a pair of conductors 61) being secured to this junction box 66, and the breaking element 64 in the form of a rod connected to the extensible tensioning device 9 being rotatably secured to this junction box 66 by means of a tie rod 63 (as shown by way of example in Fig. 4). In this way, the pivoting of the extensible tensioning device 9 causes, through the tie rod 63, a rotation of the breaking element 64 from an inactive position (as shown by way of example in Fig. 5) to an active position (as shown by way of example in Fig. 6), wherein the breaking element 64 imparts a deformation to the electrically conductive body 60.

Expediently, the electrically conductive body 60 is made of a brittle material and/or has yielding portions (for example, segments with a narrowed cross section), whereby the passage of the breaking element 64 from the rest position to the engaged position causes the breakage of the electrically conductive body and the interruption of the passage of electric current therethrough.

In the example shown, the electric current flows from left to right from the viewpoint of the figures.

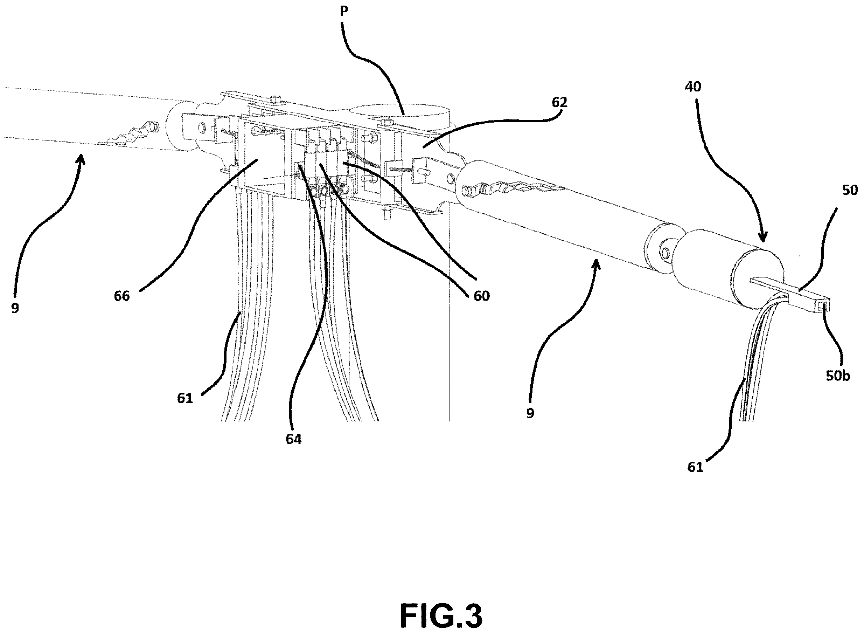

According to an embodiment, the at least one electrically conductive body 60 has an L (shown by way of example in Fig. 3), V, U (shown by way of example in Fig. 2) or W shape.

According to an embodiment, the protection system further comprises an extensible tensioning device 9 which includes an external cylindrical body 10, extended along a longitudinal direction x and delimited at the ends by a pair of facing end walls 12, 14, this cylindrical outer body 10 forming the pivotable element to which the breaking element 54 is connected.

The extensible tensioning device 9 further comprises a coupling element 16, integral with a first end wall 12 and adapted to connect the external cylindrical body 10 to the support P (ideally, to the plate 62); a piston 18, slidably housed inside the external cylindrical body 10 and comprising a rod 19 sliding within a hole passing through a second end wall 14, said piston 18 being rotatably translatable between a first retracted position, wherein the rod 19 is in a maximally retracted configuration inside the external cylindrical body 10 and in a first angular position with respect thereto, and in a second extended position, wherein the rod 19 is in a maximally extended configuration outside the external cylindrical body 10 and in a second angular position rotated with respect to the first angular position, said rod 19 having a connecting end 19a projecting externally from the second end wall 14, this connecting end 19a being adapted to connect a flexible cable to the device 9; and a first elastic means 20, housed inside the external cylindrical body 10 and adapted to bias the piston 18 toward said first retracted position.

According to an embodiment, the external cylindrical body 10 has at least one seat 22, extended between two ends spaced longitudinally from each other and circumferentially along the external surface of the external cylindrical body 10, said device 9 further comprising a pin 24, projecting transversely from the piston 18 and movable integrally with said piston, this pin 24 being slidably housed in said seat 22 between a first position proximal to a first end of the seat 22, wherein the piston 18 is in its first retracted position, and a second distal position from said first end of the seat 22, wherein the piston 18 is in its second extended position.

Expediently, the seat 22 is a slot passing through the thickness of the external cylindrical body 10 into which the pin 24 is slidably inserted.

According to an embodiment, the seat 22 is shaped in a stepped pattern.

According to an embodiment, the first elastic means 20 engages at one end the second end wall 14, and at the opposite end a projection integral with the rod 19 (expediently, an annular crown of the head of the piston 18, proximal to the first end 12); in this way, the first elastic means 20 opposes the exit of the rod 19 from the external cylindrical body 10, biasing this rod 19 toward the first retracted position.

According to a preferred embodiment, the extensible tensioning device 9 comprises a second elastic means 28 and an annular element 26, axially interposed between the first elastic means 20 and this second elastic means 28.

The annular element 26 is coaxial with respect to the rod 19 of the piston 18 and radially interposed between said rod 19 and the external cylindrical body 10, the rod 19 being slidably housed in said annular element 26, this annular element 26 being engaged on the one side by one end of the first elastic means 20 (the opposite end of said first elastic means 20 abutting against the second end wall 14 of the external cylindrical body 10), and on the other side by one end of the second elastic means 28 (the opposite end of said second elastic means 28 abutting against the projection integral with the rod 19).

The annular element 26 houses at least one hook 30, integral with the annular element 26 and radially movable (against the action of a secondary elastic means 32) between an engaged condition of a corresponding recess 33 on the rod 19, wherein the rod 19 is not free to slide with respect to the annular element 26, and a disengaged condition from the recess 33, wherein the rod 19 is free to slide with respect to the annular element 26.

In this way, in a first step of increasing the load on the flexible cable, the rod 19 tends to extend outside the external cylindrical body 10, translating integrally with the annular element 26 (as long as the engaged condition of the recess 33 by the hook 30 exists), against the force of the elastic means 20, 28 (especially the first elastic means 20), which will tend to push the annular element 26 in the opposite direction.

Since the annular element 26 is located in an intermediate position between the two elastic means 20, 28, and acts as a shoulder for both, the two elastic means 20, 28 will be arranged parallel to each other.

Once a predetermined traction value is exceeded, exerted by the flexible cable on the piston 18, the hook 30 disengages the recess 33, releasing the rod 19 from the annular element 26; in this condition, the annular element 26 will act as a floating shoulder for both elastic means 20, 28. Assuming that the first elastic means 20 has become compacted, the second elastic means 28 will continue to deform (in the illustrated example, compressing against the annular member 26).

Expediently, the first elastic means 20 has a higher stiffness than the stiffness of the second elastic means 28.

According to an embodiment, the extensible tensioning device 9 comprises a radial shim 34, slidably fitted on the rod 19 in an axially interposed position between the second end wall 14 of the external cylindrical body 10 and the annular element 26, said radial shim 34 presenting radial thickenings 34a adapted to engage the hook 30 to lift said hook radially from the engaged condition of the corresponding recess 33 on the rod 19 to the disengaged condition from the recess 33. These radial thickenings 34a are expediently configured in the manner of ramps of increasing thickness in the direction of the second end wall 14, whereby the hook 30, passing over it, lifts itself to disengage from the recess 33, thus separating the annular element 26 from the rod 19.

In this way, as the traction force exerted by the flexible cable on the rod 19 increases, said rod will translate out of the external cylindrical body 10, pulling the annular element 26, which carries the hook 30. Consequently, the hook 30 will slide on the radial thickenings 34a, from which it will be forced to uncouple from the recess 33. Expediently, the hook 33 will have an attachment portion, facing the radial shim 34, with a shape complementary to the attachment portion of the corresponding radial thickening 34a, so as to facilitate the sliding of the hook 33 on the radial thickening 34a.

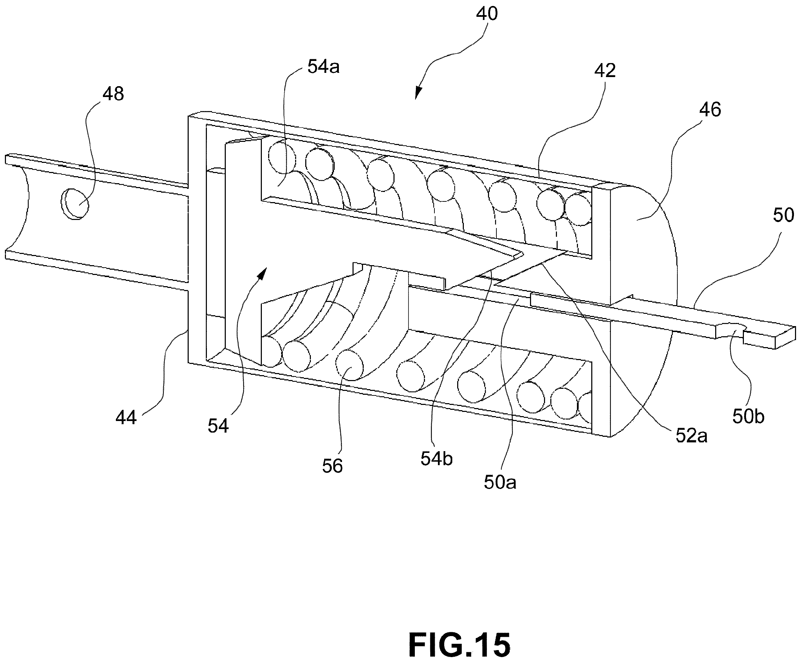

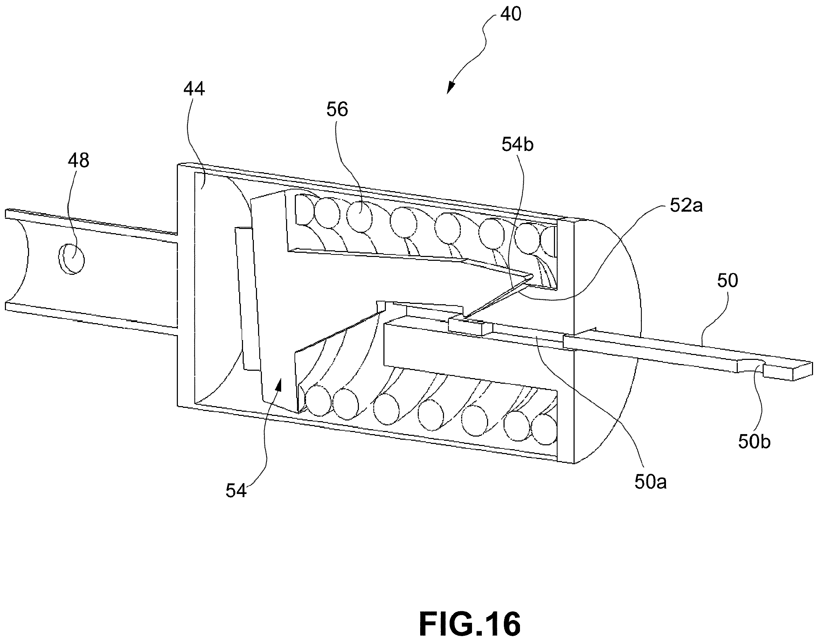

According to an embodiment, the protection system 1 further comprises an anti-pulling device 40 which includes a tubular body 42 extended along the longitudinal direction x and delimited at the ends by a pair of mutually facing secondary end walls 44, 46; a second coupling element 48, integral with a first secondary end wall 44 and adapted to connect the anti-pulling device 40 to the connecting end 19a of the rod 19 of the extensible tensioning device 9; a connecting tab 50, slidably housed in a through hole in the second secondary end wall 46, said connecting tab 50 having a first and a second seat 50a, 50b respectively on the side of the second secondary end wall 46 facing toward the inside of the tubular body 42 and on the opposite side of the second secondary end wall 46 facing outward, said second seat 50b being adapted to connect the anti-pulling device 40 to the flexible cable; a release element 52, protruding from the second secondary end wall 46 toward the inside of the tubular body 42 in such a way as to at least partially surround the first seat 50a of the connecting tab 50, said release element 52 having at least one ramp portion 52a, the radial thickness of which decreases from the second secondary end wall 46 toward the inside of the tubular body 42; a retaining element 54, slidably housed in the tubular body 42, this retaining element 54 comprising a projection 54a, extended radially, and a hook 54b, projecting axially from the projection 54a and adapted to engage the first seat 50a of the connecting tab 50, said retaining element 54 being movable between a first retaining position, wherein the hook 54b is located in a distal position from the first secondary end wall 44 and in an engaged condition of said first seat 50a of the connecting tab 50 (as shown by way of example in Fig. 15), and a second release position, wherein the hook 54b is in a position proximal to the second secondary end wall 46 and in a disengaged condition of said first seat 50a of the connecting tab 50 (as shown by way of example in Fig. 16). In the released condition, the connecting tab 50 is free to slide out of the tubular body 42, allowing the flexible cable to be detached from the line.

The hook 54b slides along the ramp portion 52a of the release element 52 in the movement between said first retention position and second release position, in such a way as to lift itself radially and disengage said first seat 50a of the connecting tab 50.

Expediently, there is also a third elastic means 56, housed in the tubular body 42 and adapted to bias the retaining element 54 toward said first retaining position.

Various aspects and embodiments of a protection system according to the invention have been described. It is understood that each embodiment may be combined with any other embodiment. Furthermore, the invention is not limited to the described embodiments, but may be varied within the scope defined by the appended claims.

## Claims

1. A protection system (1) for overhead power lines, comprising a safety device which includes:
- at least one electrically conductive body (60), extended between two ends and adapted to electrically connect the terminals of two electric conductors (61), connectable to said ends of said electrically conductive body (60);
- a coupling plate (62), securable to a support (P), to this coupling plate (62) a pivotable element being hinged; and
- a breaking element (64), connected to said pivotable element and adapted to engage the electrically conductive body (60), said breaking element (64) being movable from a rest position, wherein the electrically conductive body (60) is in an undeformed condition, and an engaged position, wherein the electrically conductive body (60) is in a deformed condition and prevents the transmission of electric current between the ends thereof.

2. The system according to claim 1, wherein the breaking element (64) is a rod hinged at one end to said pivotable element hinged to the plate (62), and at its opposite end to the electrically conductive body (60).

3. The system according to claim 1, comprising:
- a junction box (66), integral with the coupling plate (62), to this junction box (66) being secured the at least one electrically conductive body (60), and to this junction box (66) being rotatably secured the breaking element (64) in the form of a rod connected to the pivotable element by means of a tie rod (63).

4. The system according to any of the preceding claims, wherein the at least one electrically conductive body (60) has an L, V, U or W shape.

5. The system according to any of the preceding claims, wherein the electrically conductive body (60) is made at least partly of a brittle material and/or has yielding portions in the form of segments with a narrowed cross section.

6. The system according to any of the preceding claims, further comprising an extensible tensioning device (9) which includes:
- an external cylindrical body (10), extended along a longitudinal direction (x) and delimited at the ends by a pair of end walls (12, 14) facing each other, said external cylindrical body (10) forming the pivotable element to which the breaking element (54) is connected;
- a coupling element (16), integral with a first end wall (12) and adapted to connect the external cylindrical body (10) to a support (P);
- a piston (18), slidably housed inside the external cylindrical body (10) and comprising a rod (19) slidable within a hole passing through a second end wall (14), said piston (18) being rotatably translatable between a first retracted position, wherein the rod (19) is in a maximally retracted configuration inside the external cylindrical body (10) and in a first angular position with respect to the same, and a second extended position, wherein the rod (19) is in a maximally extended configuration outside the external cylindrical body (10) and in a second angular position rotated with respect to the first angular position, said rod (19) having a connection end (19a) protruding externally to the second end wall (14), said connection end (19a) being adapted to connect a flexible cable to the extensible tensioning device (9); and
- a first elastic means (20), housed inside the external cylindrical body (10) and adapted to bias the piston (18) toward said first retracted position.

7. The system according to claim 6, wherein the external cylindrical body (10) has at least one seat (22), extended between two ends mutually spaced longitudinally and circumferentially along the external surface of the external cylindrical body (10), said device (9) further comprising a pin (24), protruding transversely from the piston (18) and movable integrally with the latter, said pin (24) being slidably housed in said seat (22) between a first position proximal to a first end of the seat (22), wherein the piston (18) is in its first retracted position, and a second position distal from said first end of the seat (22), wherein the piston (18) is in its second extended position.

8. The system according to claim 7, wherein the seat (22) is a slot passing through the thickness of the external cylindrical body (10), wherein the pin (24) is inserted slidably.

9. The system according to claim 7 or 8, wherein the seat (22) is shaped in a stepped pattern.

10. The system according to any of the preceding claims, further comprising an anti-pulling device (40) which includes:
- a tubular body (42) extended along the longitudinal direction (x) and delimited at the ends by a pair of secondary end walls (44, 46), mutually facing;
- a second coupling element (48), integral with a first secondary end wall (44) and adapted to connect the anti-pulling device (40) to the connection end (19a) of the rod (19) of the extensible tensioning device (9);
- a connection tab (50), slidably housed in a hole passing through the second secondary end wall (46), said connecting tab (50) having a first and a second seat (50a, 50b) respectively on the side of the second secondary end wall (46) facing toward the inside of the tubular body (42) and on the opposite side of the second secondary end wall (46) facing outward, said second seat (50b) being adapted to connect the anti-pulling device (40) to a flexible cable;
- a release element (52), protruding from the second secondary end wall (46) toward the inside of the tubular body (42) so as to surround at least partially the first seat (50a) of the connection tab (50), said release element (52) having at least one ramp portion (52a) the radial thickness of which decreases from the second secondary end wall (46) toward the inside of the tubular body (42);
- a retaining element (54), slidably housed in the tubular body (42), this retaining element (54) comprising a projection (54a), extended radially, and a hook (54b), protruding axially from the projection (54a) and adapted to engage the first seat (50a) of the connecting tab (50), said retaining element (54) being movable between a first retaining position, wherein the hook (54b) is in a position distal from the first secondary end wall (44) and in an engaged condition of said first seat (50a) of the connecting tab (50), and a second release position, wherein the hook (54b) is in a position proximal to the second secondary end wall (46) and in a disengaged condition of said first seat (50a) of the connecting tab (50), said hook (54b) being slidable along the ramp portion (52a) of the release element (52) in the movement between said first retaining position and second release position, in such a way as to radially lift itself and disengage said first seat (50a) of the connecting tab (50); and
- a third elastic means (56), housed in the tubular body (42) and adapted to bias the retaining element (54) toward said first retaining position.
